# EUROPÄISCHE PATENTSCHRIFT

(11) **EP 0 990 519 B1**
(45) Veröffentlichungstag und Bekanntmachung des Hinweises auf die Patenterteilung: **19.10.2005**
(21) Anmeldenummer: 99116252.0
(22) Anmeldetag: 18.08.1999
(51) Int. Cl.: B41F 33/00

(54) **Bedieneinheit für eine Steuereinrichtung einer Druckmaschine**
Operating unit for the controlling device of a printing press
Module de commande pour le dispositif de commande d'une machine à imprimer

(30) Priorität: 12.09.1998 DE 29816392 U
(43) Veröffentlichungstag der Anmeldung: 05.04.2000
(73) Patentinhaber: MAN Roland Druckmaschinen AG, 63075 Offenbach (DE)
(72) Erfinder: Reinert, Hans-Martin, 63607 Wächtersbach (DE); Sirowitzki, Heiner, 65205 Wiesbaden (DE)
(74) Vertreter: Stahl, Dietmar

(56) Entgegenhaltungen:
- EP-A- 0 095 664
- EP-A- 0 649 744
- US-A- 4 639 881
- HELMUT SUSENBETH: "Rotationsleitstände..." DEUTSCHER DRUCKER, Bd. 26, Nr. 30, 27. September 1990 (1990-09-27), Seiten w5-w15, XP000142462 Ostfildern

## Beschreibung

Die Erfindung betrifft eine Bedieneinheit für eine Steuereinrichtung einer Druckmaschine, welche mehrere Bedienelemente zur Eingabe von Steuerbefehlen für die Druckmaschine aufweist.

Aus der DE 195 37 859 A1 ist ein Bediensystem für Druckmaschinen bekannt, welches eine der Druckmaschine zugeordnete Bedienfläche aufweist, die mehrere Bedienelemente enthält. Einer ersten Bedienebene sind hierarchisch eine zweite Bedienebene zur zentralen Maschinensteuerung und eine dritte Bedienebene für den Dialogbetrieb zwischen verschiedenen Standorten der Komponenten der Druckmaschine zugeordnet. Jede Bedienebene umfaßt dabei eine feste Befehlsstruktur und kann nur auf die jeder Bedienebene untergeordnete Bedienebene eingreifen. Ein Überspringen von Bedienebenen zum direkten Eingriff in einzelne Komponenten der Druckmaschine ist nicht möglich. Ein Steuerbefehl für die Druckmaschine wird dabei durch Betätigung eines einzigen Bedienelementes ausgelöst.

Aus der EP 0 293 618 B1 ist eine Einrichtung zur Steuerung einer Druckmaschine bekannt, bei der ein Steuerpult verschiedene Bedienelemente zur Eingabe von Befehlen sowie eine Anzeigeeinrichtung zur Zustandsanzeige aufweist. Die am Steuerpult angeordneten Bedienelemente weisen dabei eine Mehrfachbelegung zur Steuerung, Bedienung und Überwachung der Druckmaschine auf. Mittels einer umfangreichen Menüsteuerung wird der Benutzer mit Hilfe einer Anzeigeeinrichtung zu dem jeweiligen Steuerbefehl geführt. Durch eine Vielzahl von Bedienhandlungen, die durch eine abwechselnde Befehlseingabe und Befehlsbestätigung gekennzeichnet sind, gestaltet es sich sehr zeitaufwendig, bis der gewünschte Steuerbefehl ausgelöst werden kann.

Aus der EP-A-0 095 664 ist eine Steuervorrichtung für eine Druckmaschine bekannt, die ein Bedienfeld mit einer Mehrzahl von Drucktasten enthält. Es ist eine erste Gruppe von Drucktasten zur Auswahl eines zu veranlassenden Befehls vorgesehen, wobei die Anordnung so getroffen ist, dass zum Veranlassen der Befehlsausführung mindestens zwei Handhabungen erforderlich sind.

Der Erfindung liegt somit die Aufgabe zugrunde, eine Bedieneinheit für eine Steuereinrichtung einer Druckmaschine anzugeben, mittels welcher der gewünschte Befehl schnell und zuverlässig generiert werden kann und die dabei eine einfache, funktionsgerechte und bedienerfreundliche Handhabung zuläßt.

Erfindungsgemäß wird die Aufgabe durch die Merkmale des kennzeichnenden Teils von Anspruch 1 gelöst.

Der Vorteil der Erfindung besteht darin, daß ein Bediener der Bedieneinheit den durch die Steuereinrichtung auszuführenden Befehl in Form einer Zusammenstellung verschiedener Teilbefehle bzw. -kommandos frei definieren kann. Mit Hilfe einer begrenzten Anzahl von Bedienelementen, denen jeweils starr ein festgelegter Bedeutungsinhalt zugeordnet ist, läßt sich eine Vielzahl von Befehlsfolgen erzeugen. Die generierte Befehlsfolge wird durch die Auswerteeinrichtung entsprechend übersetzt und in ein ausführbares Steuerkommando umgewandelt.

Auf eine zeitaufwendige Menüführung wird dabei verzichtet. Durch diese Art der Eingabe können Steuerbefehle für die gesamte Druckmaschine, für eine einzelne Komponente oder für mehrere Komponenten der Druckmaschine erzeugt werden.

Zur Plausibilisierung vergleicht die Auswerteinrichtung die eingegebene Befehlsfolge mit dem aktuellen Zustand der Druckmaschine.

Erst nachdem festgestellt ist, daß die eingegebene Befehlsfolge in den Kontext des Gesamtablaufes der zu steuernden Druckmaschine paßt, wird der Steuerbefehl ausgelöst.

Zur besseren Bediener-Dialogführung ist jedes Bedienelement mit einem dem jeweiligen Bedeutungsinhalt des Bedienelementes entsprechendem Symbol versehen, wobei nach Betätigung des Bedienelementes dessen Symbol in einem ersten Anzeigefeld einer Anzeigeeinrichtung anzeigbar ist. Die durch die erfindungsgemäße Bedienfolge entstandene und visualisierte Symbolkette entspricht einem gewünschten Bedienkommando. Der Bediener ist somit zu jeder Zeit in der Lage, die Richtigkeit der von ihm eingegebenen Befehlsfolge anhand der angezeigten Symbolkette zu überprüfen.

In einer Ausgestaltung weist die Bedieneinheit mindestens ein Bedienelement zur wertmäßigen Spezifizierung der eingegebenen Befehlsfolge auf, wobei die wertmäßige Spezifizierung in einem zweiten Anzeigefeld der Anzeigeeinrichtung dargestellt ist. Somit kann mit der Erzeugung der Befehlsfolge nicht nur der gewünschte Steuerbefehl als solcher generiert werden, gleichzeitig wird in derselben Befehlsfolge der gewünschte numerische Anteil eingestellt.

Ein Bestätigungselement für die vom ersten Anzeigefeld der Anzeigeeinrichtung angezeigte Befehlsfolge ist erst nach erfolgter Plausibilisierung der eingegebenen Befehlsfolge durch die Auswerteeinrichtung bedienbar.

In einer Weiterbildung weist die Bedieneinheit eine Eingabefläche auf, wobei definierte, mit dem Symbol der einzelnen Kommandoinhalte versehene Felder der Eingabefläche als Bedienelemente ausgebildet sind und die Befehlseingabe durch Annäherung und/oder Berührung der entsprechenden Felder auf der Eingabefläche erfolgt. Gegenüber herkömmlichen Tastaturen erhöht sich die Bediensicherheit und der Bedienkomfort, da durch Berührung mit dem Finger fest gekennzeichnete Felder auf der Eingabefläche ausgewählt werden können.

In komfortabler Weise können Dateneingabesysteme mit Elementen der Datenanzeige kombiniert werden, wenn die Eingabefläche mindestens über der Anzeigeeinrichtung transparent ausgebildet und unter der Eingabefläche ein Display als Anzeigeeinrichtung zur unterstützenden Informationsausgabe angeordnet ist, wobei eine Löschung der von dem ersten Anzeigefeld der Anzeigeeinrichtung angezeigten Befehlsfolge durch Betätigung der Eingabefläche über dem ersten Anzeigefeld der Anzeigeeinrichtung erfolgt.

Ein besonderer Vorteil besteht in einer optimalen Flächennutzung des Eingabegerätes. Auf ein- und derselben Fläche können Eingaben erfolgen und auf dem darunter liegenden Display Anzeigeinhalte dargestellt werden. Auf Grund dieser Überlagerung können bei gleicher Größe der Bedieneinheit mehr Bedienelemente und auch Kommandoinhalte realisiert werden.

Die von der Bedieneinheit generierte Befehlsfolge dient vorteilhafterweise zur Erzeugung von Steuerbefehlen zur Steuerung von Funktionsabläufen einer Funktionseinheit der Druckmaschine.

Die Erfindung läßt zahlreiche Ausführungsmöglichkeiten zu. Eine davon soll anhand der in der Zeichnung dargestellten Figuren näher erläutert werden.

Es zeigt
- Figur 1:: Steuereinrichtung einer Druckmaschine
- Figur 2:: Eingabefeld der Bedieneinheit

Gleiche Merkmale sind mit gleichen Bezugszeichen gekennzeichnet.

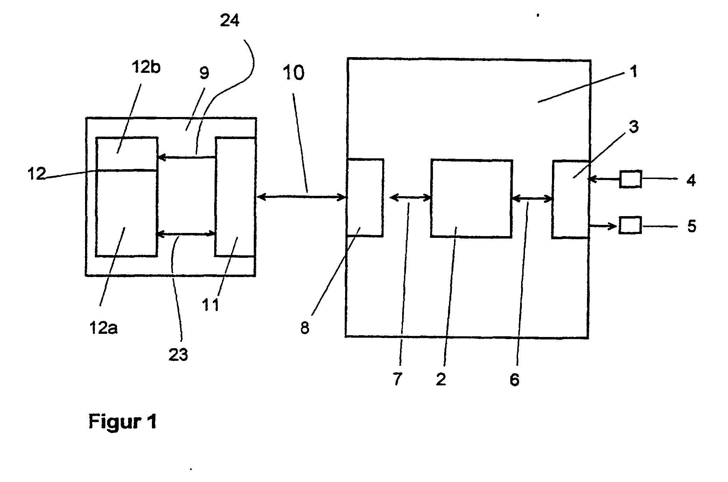

In Figur 1 ist das Prinzip einer Steuereinrichtung einer Funktionseinheit einer Bogenoffsetdruckmaschine dargestellt. Diese Steuereinrichtung 1 besteht aus einer Recheneinheit 2, welche über eine interne, bidirektionale Datenleitung 6 und über eine Schnittstelle 3 mit Sensoren und Stellelementen der nicht weiter dargestellten Funktionseinheit der Druckmaschine verbunden ist. Der Übersichtlichkeit halber sind in Figur 1 nur ein Sensor 4 und ein Stellelement 5 dargestellt.

Eine solche Steuereinrichtung 1 führt eigenständig Schaltfunktionen in der Funktionseinheit aus. Die Steuereinrichtung 1 steuert dabei den Prozeß der Funktionseinheit, indem die von Sensor 4 gelieferten Signale ausgewertet und Steuersignale für das Stellelement 5 erzeugt werden.

Über eine interne Datenleitung 7 ist die Recheneinheit 2 mit einer zweiten Schnittstelle 8 verbunden, an welche über eine Steuerleitung 10 eine Bedieneinheit 9 angeschlossen ist. Über die Bedieneinheit 9 werden Befehle und Kommandos in die Steuereinrichtung 1 der Druckmaschine eingegeben. Diese Bedieneinheit 9 weist ebenfalls eine Recheneinheit 11 auf, die mit einer Bedieneroberfläche 12 verbunden ist.

Die Bedieneroberfläche 12 besteht aus einer Eingabeoberfläche 12a und einer darüber angeordneten Anzeigefläche 12b in Form eines Displays. Über eine bidirektionale Datenleitung 23 ist die Recheneinheit 11 mit der Eingabefläche 12a verbunden. Die Anzeigeeinrichtung 12b wird von der Recheneinheit 11 über die Leitung 24 angesteuert.

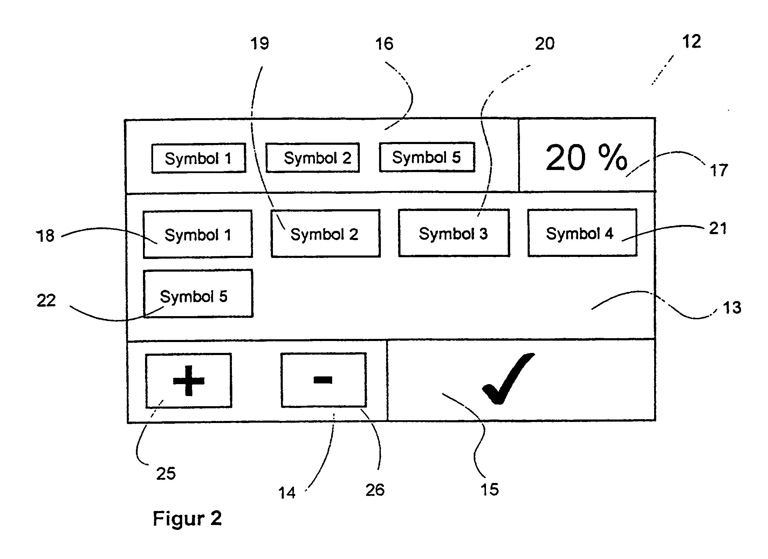

In Figur 2 ist die Bedieneroberfläche 12 zur Erzeugung einer Befehlsfolge dargestellt. Diese Bedieneroberfläche 12 ist in mehrere Bereiche unterteilt, wobei die Bereiche 13, 14, 15 die Eingabeoberfläche 12a und die Bereiche 16 und 17 die Anzeigeeinrichtung 12b bilden.
Im Bereich 13 sind verschiedene Bedienelemente 18, 19, 20, 21, 22 angeordnet, wobei die Betätigung jedes Bedienelementes ein Kommando mit starrem Bedeutungsinhalt erzeugt. Dabei ist jedes Bedienelement 18, 19, 20, 21, 22 mit einem den Bedeutungsinhalt charakterisierenden Symbol gekennzeichnet.

Über dem Bereich 13 ist ein erstes Anzeigefeld 16 angeordnet. Mit Hilfe dieses Displays werden die Symbole in der Reihenfolge angezeigt, in welcher der Bediener die Bedienelemente 18 bis 22 betätigt. Neben dem Bereich 16 visualisiert ein zweites Anzeigefeld 17 Werte, durch welche der Bediener die eingegebene Befehlsfolge weiter spezifizieren kann. Die Spezifizierung erfolgt durch Steuerbedienelemente 25, 26, wie sie im Bereich 14 unterhalb des Bereiches 13 dargestellt sind. Solche Steuerbedienelemente 25, 26 können sein: Plus, Minus, Auf, Ab usw. und sind mit den Symbolen +, -, ⇑, 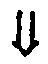 gekennzeichnet.
Neben dem Bereich 14 ist ein Bereich 15 vorgesehen, der zur Bestätigung der eingegebenen Befehlsfolge dient.

Die Bedienelemente 18 bis 22 sowie 25, 26 bzw. der die Eingabefläche bildende Bereich 15 können durch Tastenelemente realisiert sein. In einer komfortablen Ausführung ist die erfindungsgemäße Bedieneeinheit als Touchscreen ausgebildet. Dabei ist der transparent ausgebildeten Eingabefläche 12a ein Display unterlegt. Die Eingabefläche 12a weist an den die Bedienelemente 18 bis 22 des Bereiches 13 darstellenden Flächen nicht weiter dargestellte Sensoren , z.B. pro Fläche einen oder mehrere Drucksensoren auf. Das darunter liegende Display erzeugt unter dieser transparenten Fläche starr das oben beschriebene Symbol, so das der Bediener sich an der Eingabefläche 12a orientierten kann. Bei Berührung der durch das Display visualisierten Bedienelemente 18 bis 22 liefert der jeweilige Drucksensor ein elektrisches Signal an die Recheneinheit 11, welche daraufhin die Anzeigeeinrichtung 12b zur Anzeige des entsprechendes Symbols ansteuert.

In einer anderen Ausgestaltung ist das Display bloß auf die Bereiche 16 und 17 beschränkt, während die Eingabefläche 12a die Bereiche 13, 14, 15 bildet. Dabei kann unter die transparente Eingabefläche 12a eine Symbolleiste mit den Symbolen zur Charakterisierung der entsprechenden Betätigungsflächen als Bedienelemente 18 bis 22, 25, 26 geschoben werden.

Der Aufbau der Bedieneinheit ist nicht auf die beschriebenen Möglichkeiten beschränkt, sondern es sind mehrere vorteilhafte Kombinationen möglich. So kann die Eingabefläche 12a das gesamte Display überdecken, wobei zum Beispiel ein Eingabefeld über dem ersten Anzeigefeld 16 zum Löschen einer falsch eingegebenen Befehlsfolge genutzt werden kann, wenn dies durch den Bediener nach Eingabe der Befehlsfolge erkannt wurde. Dadurch wird Platz für ein zusätzliches Bedienelement gespart, wodurch die Bedieneinheit baulich entsprechend kleiner gestaltet werden kann.

Will der Bediener einen Steuerbefehl für das Steuergerät der Funktionseinheit der Druckmaschine erzeugen, drückt er die gewünschten mit den entsprechenden Symbolen gekennzeichneten Bedienelemente 13 bis 18 des Bereiches 13. Im ersten Anzeigefeld 16 werden die Symbole der betätigten Bedienelemente angezeigt.

Ein Kommandointerpreter, der entweder in der Recheneinheit 11 der Bedieneinheit 9 selbst oder durch die Recheneinheit 2 der Steuereinrichtung 1 der Funktionseinheit der Druckmaschine realisiert ist, überprüft die eingegebene Befehlsfolge dahingehend, ob sie in den Programmablauf der Funktionseinheit der Druckmaschine paßt. Außerdem berücksichtigt der Kommandointerpreter vom Sensor 4 gelieferte Informationen über den aktuellen Maschinenzustand und die aktuelle Position des Stellelementes 5. Paßt die vom Bediener eingegebene Befehlsfolge in den Programmablauf der Funktionseinheit, wird die Befehlsfolge von dem Kommandointerpreter in den entsprechenden Steuerbefehl für die Funktionseinheit umgewandelt. Ist die eingegebene Befehlsfolge nicht plausibel, wird dies dem Bediener durch Blinken der Symbole des ersten Anzeigefeldes 16 angezeigt.

Die beschriebene Bedieneinheit 9 kann an jeder Funktionssteuereinheit der Offsetdruckmaschine angeordnet sein, so daß der Bediener direkt entweder am Anleger, am Offsetdruckwerk, am Lackwerk bzw. am Ausleger der Druckmaschine die gewünschten Steuerbefehle eingeben kann.

Die Bedienung der Bedieneinheit 9 soll anhand eines Offsetdruckwerkes näher erläutert werden. Ein solches Druckwerk weist verschiedene Zylinder, wie Gegendruck-, Gummituch- und Plattenzylinder sowie mehrere Transferzylinder auf. Dabei ist jedem Zylinder ein Bedienelement zugeordnet. Sollen durch die Steuereinheit die Zylinder des Offsetdruckwerkes angeschaltet werden, wird folgende Befehlsfolge durch Betätigung der einzelnen Bedienelemente eingegeben: "Start, Transferzylinder, Gegendruckzylinder, Gummituchzylinder, Plattenzylinder".
Soll nach dem Maschinenstart der Gummituchzylinder durch den Plattenzylinder mit Farbe getränkt werden, wird der Bediener folgende Befehlsfolge eingeben: "Plattenzylinder, Einfärben, Gummituchzylinder, Anlegen". Dabei ist für die Kommandos "Einfärben" und "Anlegen" jeweils ein Bedienelement vorgesehen.
Soll die Drehzahl eines Zylinders geändert werden, wird ein entsprechendes Bedienelement Drehzahl und das Bedienelement des Zylinders betätigt und durch die Elemente 23 und 24 die Prozentzahl der gewünschten Drehzahl eingestellt.

Das Ende des Bedienkommandos wird der Recheneinheit 11 durch Betätigung des Bereiches 15 mitgeteilt.

Die Recheneinheit 11 der Bedieneinheit 9 überprüft nun, ob das eingegebene Bedienkommando zulässig ist, indem sie dieses mit dem Ist-Zustand der Maschinensteuerung vergleicht. So wird beispielsweise eine Drehzahländerung unterbunden, wenn der entsprechende Zylinder außer Betrieb ist.

Sind die Zylinder nicht gestartet, wird ein Befehl zum Einschalten des Papierlaufes durch die Recheneinheit 11 unterbunden, indem aus der eingegebenen Befehlsfolge kein Steuerbefehl für die Steuereinheit 1 generiert wird.

Äquivalent zu der Generierung der Befehlsfolge für das Offsetdruckwerk, lassen sich auch die Steuerbefehle für den Anleger oder den Ausleger der Druckmaschine erzeugen.

Neben einer solchen dezentralen Bedienstelle ist es aber auch vorstellbar, die erfindungsgemäße Bedieneinheit einer zentralen Maschinensteuerung zuzuordnen, wo einzelne Bedienelemente der entsprechenden Funktionssteuereinheit zugeordnet sind.

Da die Bogenoffsetdruckmaschine mehrere Druckwerke aufweist, wird nur durch Betätigung des jeweiligen Bedienelementes das gewünschte Druckwerk ausgewählt und in die Befehlsfolge eingereiht. Ist beispielsweise bei einer Fünffarbendruckmaschine ein Druck mit vier Farben vorgesehen, wobei jedes Druckwerk den Bogen mit einer Farbe bedruckt, wird folgende Befehlsfolge eingegeben: "Druckwerk 4, Plattenzylinder, Einfärben". Würde der Bediener versehentlich statt Druckwerk 4 Druckwerk 5 eingeben, unterbindet der Kommandointerpreter einen solchen Steuerbefehl, da Druckwerk 5 in diesem Fall nicht genutzt wird.

Durch beliebige Kombination der Bedienelemente ist somit eine vorteilhafte Bediener-Dialogführung möglich, die eine schnelle Generierung eines beliebigen Befehls erlaubt und auf langwierige Menüführungen verzichtet.

### Bezugszeichen

- 1: Steuereinrichtung
- 2: Recheneinheit
- 3: Schnittstelle
- 4: Sensor
- 5: Stellglied
- 6: interne Datenleitung zur Schnittstelle 3
- 7: interne Datenleitung zur Schnittstelle 8
- 8: Schnittstelle
- 9: Bedieneinheit
- 10: Datenleitung
- 11: Recheneinheit
- 12: Bedieneroberfläche
- 12a: Eingabeoberfläche
- 12b: Anzeigeeinrichtung
- 13: Bedienbereich
- 14: Verifizierungsbereich
- 15: Bestätigungselement
- 16: erstes Anzeigefeld
- 17: zweites Anzeigefeld
- 18: Bedienelement
- 19: Bedienelement
- 20: Bedienelement
- 21: Bedienelement
- 22: Bedienelement
- 23: bidirektionale Datenleitung
- 24: unidirektionale Datenleitung
- 25: Bedienelement
- 26: Bedienelement

## Patentansprüche

1. Bedieneinheit für eine Steuereinrichtung einer Druckmaschine, welche mehrere Bedienelemente zur Befehlseingabe für die Steuereinrichtung aufweist,
**dadurch gekennzeichnet,**
**dass** jedem Bedienelement (18,19,20,21,22) unveränderlich ein fester Kommandoinhalt zugeordnet ist und durch die Betätigung einer ausgewählten Anzahl der Bedienelemente (18,19,20,21,22) in beliebiger Reihenfolge eine Befehlsfolge erzeugbar ist, welche einer Auswerteeinrichtung (2;11) zuführbar ist, die eingegebene Befehlsfolge nach einer Plausibilitätsprüfung in einen Steuerbefehl für die Steuereinrichtung (1) der Druckmaschine umsetzt, dass die Auswerteeinrichtung (2;11) die eingegebene Befehlsfolge mit dem aktuellen Zustand der Druckmaschine vergleicht, dass jedes Bedienelement (18,19,20,21,22) mit einem dem jeweiligen Kommandoinhalt des Bedienelementes (18,19,20,21,22) entsprechenden Symbol versehen ist, wobei nach Betätigung des Bedienelementes (18,19,20,21,22) dessen Symbol von einem ersten Anzeigefeld (16) einer Anzeigeeinrichtung (12b) anzeigbar ist, und dass ein Bestätigungselement (15) für die vom ersten Anzeigefeld (16) der Anzeigeeinrichtung (12b) angezeigte Befehlsfolge erst nach erfolgter positiver Prüfung der eingegebenen Befehlsfolge durch die Auswerteeinrichtung (2,11) bedienbar ist.

2. Bedieneinheit nach Anspruch 1,
**dadurch gekennzeichnet,**
**dass** mindestens ein Bedienelement (23,24) zur wertmäßigen Spezifizierung der eingegebenen Befehlsfolge vorhanden ist und die wertmäßige Spezifizierung in einem zweiten Anzeigefeld (17) der Anzeigeeinrichtung (12b) dargestellt ist.

3. Bedieneinheit nach einem der Ansprüche 1 und 2,
**dadurch gekennzeichnet,**
**dass** eine Eingabefläche (12a) vorhanden ist, wobei definierte, mit dem Symbol der einzelnen Kommandoinhalte versehene Felder der Eingabefläche als Bedienelement (18,19,20,21,22) ausgebildet sind und die Befehlseingabe durch Annäherung und/oder Berührung des entsprechenden Feldes auf der Eingabefläche (12a) erfolgt.

4. Bedieneinheit nach Anspruch 3,
**dadurch gekennzeichnet,**
**dass** über der Anzeigeeinrichtung (12b) eine transparente Eingabefläche (12a) ausgebildet ist und als Anzeigeeinrichtung (12b) ein Display zur unterstützenden Informationsausgabe angeordnet ist, wobei eine Löschung der von dem ersten Anzeigefeld (16) der Anzeigeeinrichtung (12b) angezeigten Befehlsfolge durch Betätigung der Eingabefläche über dem ersten Anzeigefeld (16) der Anzeigeeinrichtung (12b) erfolgt.

5. Bedieneinheit nach Anspruch 1,
**dadurch gekennzeichnet,**
**dass** die Steuereinrichtung (1) zur Steuerung von Funktionsabläufen einer Funktionseinheit der Druckmaschine ausgebildet ist.

## Claims

1. Operating unit for a control device of a printing press, which has a plurality of operating elements for the entry of instructions for the control device, **characterized**
**in that** each operating element (18, 19, 20, 21, 22) is permanently assigned a fixed command content and, as a result of the actuation of a selected number of operating elements (18, 19, 20, 21, 22) in any desired sequence, a sequence of instructions can be generated, which can be fed to an evaluation device (2; 11) which, following a plausibility check, converts the sequence of instructions entered into a control instruction for the control device (1) of the printing press,
**in that** the evaluation device (2; 11) compares the sequence of instructions entered with the current state of the printing press,
**in that** each operating element (18, 19, 20, 21, 22) is provided with a symbol corresponding to a respective command content of the operating element (18, 19, 20, 21, 22), it being possible, following actuation of the operating element (18, 19, 20, 21, 22), for its symbol to be displayed by a first display area (16) of a display device (12b) , and
**in that** a confirmation element (15) for the sequence of instructions displayed by the first display area (16) of the display device (12b) can be operated only after a positive check of the sequence of instructions entered has been carried out by the evaluation device (2, 11).

2. Operating unit according to Claim 1, **characterized in that** there is at least one operating element (23, 24) for the specification of the value of the sequence of instructions entered, and the specification of the value is displayed in a second display area (17) of the display device (12b).

3. Operating unit according to one of claims 1 and 2, **characterized in that** there is an entry area (12a), defined fields of the entry area provided with the symbol of the individual command contents being formed as an operating element (18, 19, 20, 21, 22) and the entry of instructions being carried out by approaching and/or touching the appropriate field on the entry area (12a).

4. Operating unit according to Claim 3, **characterized in that** a transparent entry area (12a) is formed over the display device (12b) and a display for the supportive output of information is arranged as the display device (12b), erasure of the sequence of instructions displayed by the first display area (16) of the display device (12b) being carried out by actuating the entry area above the first display area (16) of the display device (12b).

5. Operating unit according to Claim 1, **characterized in that** the control device (1) is designed to control functional sequences of a functional unit of the printing press.

## Revendications

1. Unité de commande pour un dispositif de commande d'une presse à imprimer, laquelle présente plusieurs éléments de commande destinés à la saisie des instructions pour le dispositif de commande, **caractérisée en ce qu'**une instruction fixe est associée à chaque élément de commande (18, 19, 20, 21, 22) sans pouvoir être modifiée et un actionnement d'un nombre choisi d'éléments de commande (18, 19, 20, 21, 22) dans un ordre quelconque permet de générer une série d'instructions qui peut être acheminée à un dispositif d'interprétation (2 ; 11) qui, après un contrôle de plausibilité, convertit la série d'instructions saisie en une instruction de commande pour le dispositif de commande (1) de la presse à imprimer, que le dispositif d'interprétation (2 ; 11) compare la série d'instructions saisie avec l'état actuel de la presse à imprimer, que chaque élément de commande (18, 19, 20, 21, 22) est muni d'un symbole correspondant à l'instruction correspondante de l'élément de commande (18, 19, 20, 21, 22), le symbole de l'élément de commande (18, 19, 20, 21, 22), après avoir actionné ce dernier, pouvant être affiché par une première zone d'affichage (16) d'un dispositif d'affichage (12b), et qu'un élément d'actionnement (15) pour la série d'instructions affichée par la première zone d'affichage (16) du dispositif d'affichage (12b) ne peut être utilisé qu'après contrôle positif de la série d'instructions saisie par le dispositif d'interprétation (2, 11).

2. Unité de commande selon la revendication 1, **caractérisée en ce qu'**il, existe au moins un élément de commande (23, 24) pour la spécification qualitative de la série d'instructions saisie et la spécification qualitative est représentée dans une deuxième zone d'affichage (17) du dispositif d'affichage (12b).

3. Unité de commande selon l'une des revendications 1 et 2, **caractérisée en ce qu'**il existe une surface de saisie (12a), des zones définies de la surface de saisie, munies du symbole de chacune des instructions, étant réalisées sous la forme d'éléments de commande (18, 19, 20, 21, 22) et la saisie d'instructions s'effectuant en s'approchant et/ou en touchant le champ correspondant sur la surface de saisie (12a).

4. Unité de commande selon la revendication 3, **caractérisée en ce qu'**une surface de saisie (12a) transparente est formée au-dessus du dispositif d'affichage (12b) et le dispositif d'affichage (12b) installé est un écran de diffusion d'informations d'assistance, un effacement de la série d'instructions affichée par la première zone d'affichage (16) du dispositif d'affichage (12b) s'effectuant en actionnant la surface de saisie au-dessus de la première zone d'affichage (16) du dispositif d'affichage (12b).

5. Unité de commande selon la revendication 1, **caractérisée en ce que** le dispositif de commande (1) est configuré pour commander l'exécution des fonctions d'une unité fonctionnelle de la presse à imprimer.
